## Europäisches Patentamt
## European Patent Office
## Office européen des brevets

(19)

(11) Numéro de publication: **0 005 401**
**B1**

(12) **FASCICULE DE BREVET EUROPEEN**

(45) Date de publication du fascicule du brevet: **10.02.82**

(51) Int. Cl.³: **G 02 B 23/08, G 02 B 23/16**

(21) Numéro de dépôt: **79400277.4**

(22) Date de dépôt: **27.04.79**

(54) Dispositif optique de surveillance panoramique porté par un véhicule.

(30) Priorité: **03.05.78 FR 7813166**

(43) Date de publication de la demande:
**14.11.79 Bulletin 79/23**

(45) Mention de la délivrance du brevet:
**10.02.82 Bulletin 82/6**

(84) Etats contractants désignés:
**CH DE GB IT NL SE**

(56) Documents cités:
**DE - A - 1 547 125**
**DE - A - 1 547 129**
**DE - A - 1 800 330**
**DE - A - 1 812 224**
**DE - B - 2 212 306**
**FR - A - 1 604 958**
**US - A - 3 420 594**
**US - A - 3 442 575**
**US - A - 3 723 005**
**US - A - 3 966 298**

73) Titulaire: **SOCIETE ANONYME DE TELECOMMUNICATIONS**
**40 avenue de New York**
**F-75116 Paris (FR)**

72) Inventeur: **Baudot, Jean-Jacques**
**Le Monastère**
**F-92410 Ville d'Avray (FR)**

74) Mandataire: **Bloch, Robert**
**39 avenue de Friedland**
**F-75008 Paris (FR)**

Courier Press, Leamington Spa, England.

## 0 005 401

### Dispositif optique de surveillance panoramique porté par un véhicule

La présente invention concerne un dispositif optique de surveillance panoramique porté par un véhicule, comprenant un tube de visée, monté, dans le véhicule, rotatif autour de son axe optique et à l'extrémité supérieure duquel est monté un miroir, mobile autour d'un axe orthogonal à l'axe optique du tube et déterminant l'angle de site d'une direction de visée, un organe d'entraînement fixé au véhicule pour entraîner le tube en rotation, et une centrale de verticale pour fournir des tensions électriques représentatives de l'angle de tangage et de l'angle de roulis du véhicule.

On connaît déjà par les demandes de brevets allemands Nos 1 547 129 et 1 547 125 des dispositifs, pourvus d'équipements gyroscopiques autonomes, destinés à la stabilisation d'une ligne de visée, qui peut être modifiée au gré de l'observateur.

Toutefois, l'invention de la présente demande vise un but différent. Elle vise à assurer la constance du site absolu de la ligne de visée, dont le gisement varie au cours du mouvement du dispositif de surveillance panoramique porté par un véhicule instable.

Plus précisément, l'invention consiste à construire par des moyens électromécaniques l'expression du site de la direction de visée en fonction de la position angulaire du miroir, d l'angle de gisement instantané de la direction de visée et de la position du véhicule, et à asservir cette expression à la valeur désirée de l'angle de site, pour que la position angulaire du miroir prenne constamment la valeur qui fournit un angle de site égal à la valeur désirée.

A cet effet, l'invention concerne un dispositif optique de surveillance panoramique porté par un véhicule, comprenant un tube de visée, monté, dans le véhicule, rotatif autour de son axe optique et à l'extrémité supérieure duquel est monté un miroir, mobile autour d'un axe orthogonal à l'axe optique du tube et déterminant l'angle de site d'une direction de visée, un organe d'entraînement fixé au véhicule pour entraîner le tube en rotation, et une centrale de verticale pour fournir des tensions électriques représentatives de l'angle de tangage et de l'angle de roulis du véhicule, caractérisé par le fait qu'il comprend des moyens électromécaniques agencés pour calculer l'angle de site de la direction de visée et l'asservir à un angle de site $S_o$ déterminé, comportant un premier résolveur dont le rotor est entraîné en synchronisme avec le tube de visée et dont les primaires sont reliés à la dite centrale, un second résolveur fournissant une tension représentative de l'angle de site $S_o$, un troisième résolveur dont les primaires sont reliés respectivement à l'un des secondaires du premier résolveur et à la dite centrale et fournissant à l'un de ses secondaires une tension de sortie représentative de l'angle de site de la direction de visée, en fonction des angles de tangage et de roulis du véhicule, une boucle de réaction pour asservir la tension de sortie du troisième résolveur sur la tension de sortie du second résolveur et des moyens pour transmettre le déplacement du rotor du troisième résolveur à l'axe du miroir avec un rapport 2:1.

Un avantage de l'invention est que les secondaires du premier et du troisième résolveur non utilisés pour la stabilisation du site fournissent des grandeurs électriques qui peuvent servir à définir et à compenser le "dévers" d'image, c'est-à-dire la rotation du champ observé due au fait que la direction de visée n'est pas confondue avec la direction du regard de l'observateur.

L'invention sera bien comprise à la lecture de la description suivante, faite en se référant au dessin annexé sur lequel:

— la figure 1 est une vue en élévation et coupe partielle d'un dispositif de type périscope équipé selon l'invention;
— la figure 2 montre la position du véhicule par rapport à un trièdre de référence;
— la figure 3 illustre la position géométrique du miroir, et
— la figure 4 représente sous forme de diagramme-bloc les moyens électromécaniques prévus par l'invention pour équiper le dispositif optique de la figure 1.

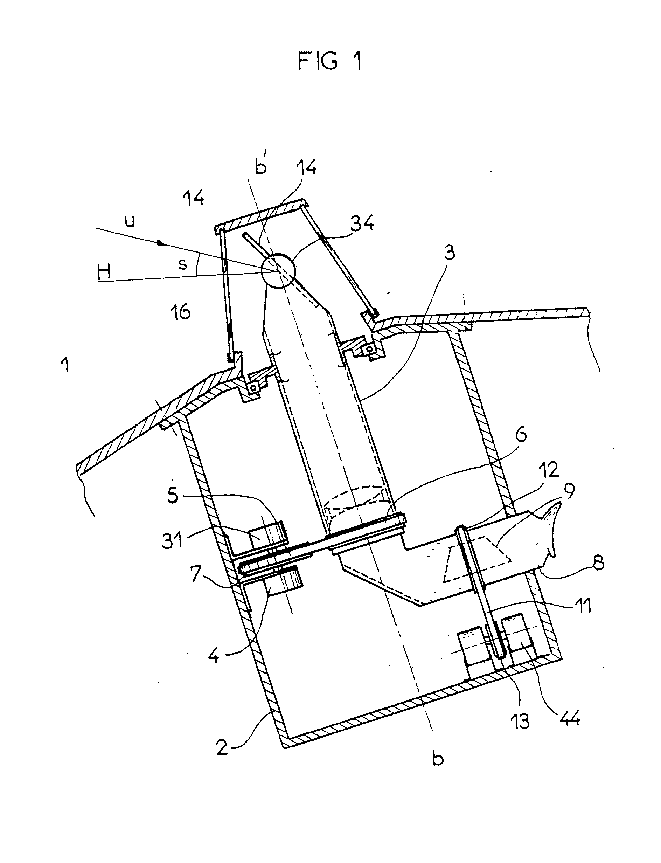

La figure 1 représente la châssis 1 d'un véhicule auquel est fixé un boîtier 2. Dans ce boîtier est monté rotatif, par l'intermédiaire d'un roulement à billes, le tube de visée 3 d'un dispositif optique de type périscope. Le tube de visée est entraîné en rotation autour de son axe optique bb' par un moteur 4 fixé au boîtier 2, par l'intermédiaire d'une courroie crantée 5 et de roues 6, 7 ou moyens analogues, le rapport de transmission étant égal à l'unité.

Le dispositif optique comprend de plus un oculaire fixe 8 qui se raccorde au tube de visée 3. Un prisme de Wollaston 9 ou organe analogue est monté dans l'oculaire et est entraîné en rotation par un moteur 10 par l'intermédiaire d'une courroie crantée 11 et de roues 12, 13 qui assurent un rapport de transmission 2:1.

A l'extrémité supérieure du tube 3, un miroir de renvoi 14 est monté mobile autour d'un axe perpendiculaire à l'axe optique bb'. La position angulaire du miroir 14 détermine le site S de la direction de visée u du périscope, le site S étant l'angle que fait la direction de visée avec le plan horizontal H d'un référentiel terrestre. Cette position angulaire est commandée par un petit moteur 34, d'une manière qu'on va décrire en détail ci-après, un réducteur de rapport 2:1 (non représenté sur la figure 1) étant prévu entre l'arbre du moteur 34 et l'axe du miroir.

2

En outre, un cache de protection 16, muni d'une surface latérale en matière transparente, est fixé au véhicule au-dessus du miroir.

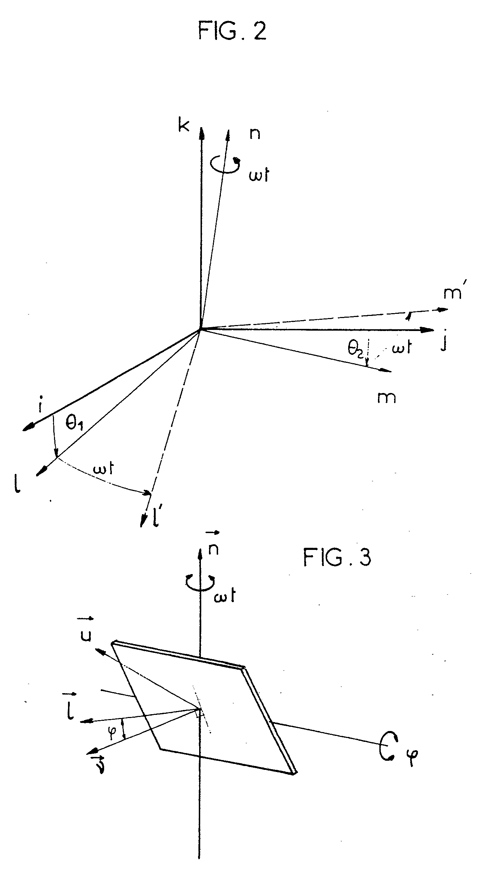

On a représenté à la figure 2 un trièdre de référence terrestre composé des secteurs $\vec{i}, \vec{j}, \vec{k}$, le vecteur $\vec{k}$ définissant la verticale.

Le trièdre trirectangle lié au véhicule est composé des vecteurs $\vec{l}, \vec{m}, \vec{n}$, Le vecteur $\vec{l}$ est dirigé suivant l'axe longitudinal du véhicule, dans le sens d'avancement normal, c'est l'axe de roulis. Le vecteur $\vec{n}$ est confondu avec l'axe optique bb' du tube de visée, et correspond donc à la "verticale" du véhicule.

Enfin, le vecteur $\vec{m}$ perpendiculaire aux précédents est transversal au véhicule, c'est l'axe de tangage.

La position du véhicule par rapport aux axes du référentiel terrestre peut être définie par l'angle $\theta_1$ (tanage) que forment les vecteurs $\vec{i}$ et $\vec{l}$, et l'angle $\theta_2$ (roulis), que forment les vecteurs $\vec{j}$ et $\vec{m}$.

On peut également définir cette position par l'angle $\Theta$, inclinaison du vecteur $\vec{n}$, c'est-à-dire de l'axe optique bb' du tube 3, par rapport à la verticale $\vec{k}$ dans le plan $(\vec{k}, \vec{n})$, et $\alpha$, angle dièdre du plan $(\vec{k}, \vec{n})$ par rapport au plan $(\vec{k}, \vec{l})$, les relations entre le couple $(\theta_1, \theta_2)$ et le couple $(\Theta, \alpha)$ étant classiquement les suivantes:

$$\cos \Theta = \cos \theta_1 \cos \theta_2; \ t_g\alpha = t_g\theta_2/\sin \theta_1$$

Le tube de visée 3 effectue un mouvement de rotation $\omega t$ autour de son axe optique bb'. Le miroir 14 est soumis à ce mouvement panoramique et est mobile en outre autour son axe. Sa position par rapport au véhicule est définie, si l'on se réfère à la figure 3, par l'angle $\varphi$ de la normale $\vec{\nu}$ avec le plan $(\vec{l}, \vec{m})$ et par l'angle $\omega t$.

Par ailleurs, on a appelé (cf. figure 1) S l'angle de site de la direction de visée, c'est-à-dire l'angle que fait le vecteur $\vec{u}$ avec la plan horizontal H défini par les vecteurs $(\vec{l}, \vec{j})$.

L'angle de gisement G de la direction de visée est l'angle dièdre du plan $(\vec{u}, \vec{k})$ avec la plan $(\vec{l}, \vec{k})$ correspondant au cap due véhicule.

La valeur du site S en fonction de la position du miroir et des données de position du véhicule est telle que

$$\sin S = \sin 2\varphi(\cos \omega t . \sin \theta_1 + \sin \omega t . \sin \theta_2 . \cos \theta_1) + \cos 2\varphi(\cos \theta_1 . \cos \theta_2) \qquad (1)$$

ou, de façon plus condensée,

$$\sin S = \sin 2\varphi(\sin \Theta . \cos (\omega t + \Phi) + \cos 2\varphi . \cos ⓗ$$

en posant $tg\Phi = \sin \theta_2/tg\theta_1$

L'angle de site S est la grandeur qu'il s'agit de maintenir constante et égale à une valeur $S_o$ déterminée tout au long du mouvement de balayage panoramique imposé au miroir.

Pour y parvenir, on "construit" le second membre de l'équation (1) ci-dessus au moyen d'un ensemble de résolveurs, à partir des angles de tangage-roulis $\theta_1$ et $\theta_2$ fournis sous forme de lignes trigonométriques par une centrale ou "plate-forme de verticale" existant dans le véhicule, et on asservit la valeur de ce second membre à une valeur déterminée, égale au sinus de l'angle de site $S_o$ désiré, en agissant sur la position dur miroir définie par l'angle $\varphi$.

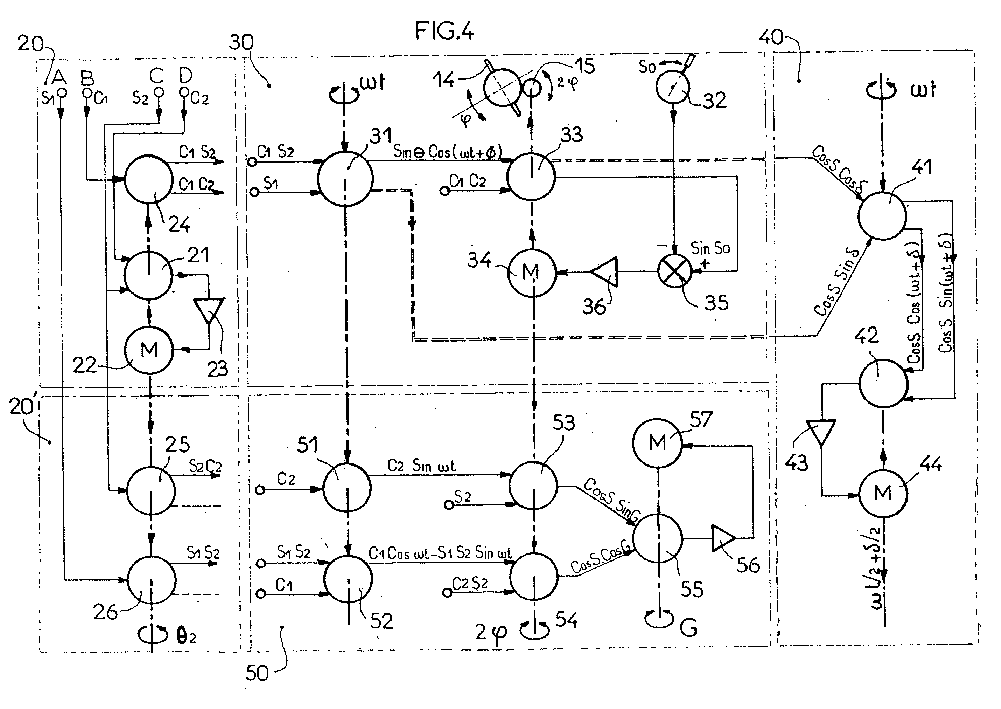

Une forme de réalisation préférée des moyens mis en oeuvre est représentée à la figure 4, où l'ensemble 20 est intégré à la plate-forme de verticale et le dispositif de stabilisation du site proprement dit est constitué par l'ensemble 30.

La plate-forme de verticale est un dispositif bien connu qu'il est inutile de décrire ici. On l'a symbolisée ici par les entrées A, B, C, D de l'ensemble 20.

L'ensemble 20 reçoit sur ses entrées A, B, C, D des tensions électriques fournies par la plate-forme de verticale et proportionnelles aux fonctions trigonométriques de $\theta_1$ et $\theta_2$, à savoir respectivement $\sin \theta_1$, $\cos \theta_1$ et $\sin \theta_2$, $\cos \theta_2$, désignées de façon abrégée sur la figure 4 par $S_1$, $C_1$ et $S_2$, $C_2$.

L'ensemble 20 comprend une unité d'asservissement composé d'un résolveur 21, d'un moteur 22 et d'un amplificateur 23, et un résolveur 24 dont le rotor recopie la position du rotor du résolveur 21.

Le résolveur 21 reçoit sur ses primaires $\cos \theta_2$ et $\sin \theta_2$ et son rotor prend par conséquent la position $\theta_2$.

Le résolveur 24 reçoit sur un primaire une tension $\cos \theta_1$, et délivre par conséquent à ses secondaires des tensions $\cos \theta_1 . \sin \theta_2$ et $\cos \theta_1 . \cos \theta_2$.

Ces tensions seront utilisées dans l'ensemble 30, de la manière décrite ci-après.

L'ensemble 30 comprend un résolveur 31 destiné au calcul de la première expression entre crochets de l'équation (1), un résolveur 32 à commande manuelle pour afficher la valeur désirée $S_o$, un résolveur 33 destiné au calcul du second membre de l'équation (1) et dont le rotor est lié à l'axe du miroir 14, et une boucle d'asservissement dont la fonction est d'annuler la différence entre les sorties des résolveurs 32 et 33.

Le résolveur 31 est entraîné en synchronisme avec le tube de de visée et son rotor occupe donc une position angulaire $\omega$t. Il reçoit en provenance de l'ensemble 20 les tensions sin $\theta_1$ et sin $\theta_2$ . cos $\theta_1$, et fournit par suite sur un de ses secondaires une tension proportionnelle à:

$$\cos \omega t . \sin \theta_1 + \sin \omega t . \sin \theta_2 . \cos \theta_1.$$

L résolveur 33 reçoit cette dernière tension sur l'un de ses primaires et la valeur cos $\theta_1$ . cos $\theta_2$ sur l'autre en provenance du résolveur 24. Son rotor est relié à l'axe du miroir 14 par l'intermédiaire d'un réducteur 15 de rapport 2:1 et, de ce fait, sa position angulaire peut être définie comme étant égale à $2\varphi$. Cette position angulaire est commandée par le moteur 34 de la boucle d'asservissement, laquelle comprend également un soustracteur 35 et un amplificateur 36.

Le soustracteur 35 reçoit sur son entrée reliée à l'un des secondaires du résolveur 33 une tension

$$\sin 2\varphi[\cos \omega t . \sin \theta_1 + \sin \omega t . \sin \theta_2 . \cos \theta_1] + \cos 2\varphi[\cos \theta_1 . \cos \theta_2],$$

cette tension étant représentative de l'angle de site S de la direction de visée, en fonction des angles de tangage $\theta_1$ et de roulis $\theta_2$ du véhicule, et sur son autre entrée, reliée au résolveur 32, une tension sin $S_0$.

La tension de sortie du soustracteur, égale à la différence de ces tensions, est amplifiée puis appliquée au moteur 34 qui commande le rotor du résolveur 33 dans le sens d'une annulation de cette différence. L'angle $2\varphi$ prend donc constamment la valeur qui vérifie l'équation (1) ci-dessus, et la position $\varphi$ du miroir est ainsi déterminée pour qu'à tout moment le site de la direction de visée soit égal à $S_0$.

L'ensemble 40 de la figure 4 sert à la correction du dévers d'image.

Le dévers d'image est la rotation du champ qui se produit dans un dispositif périscopique du fait que la direction de visée (mobile) et la direction (fixe) du regard de l'observateur ne coïncident pas. Si l'on suppose $\theta_1=0$ et $\theta_2=0$, le dévers d'image est égal à $\omega$t et pour corriger ce dévers, on utilise classiquement un prisme de Wollaston ou organe analogue que l'on fait tourner sur l'axe optique du dispositif d'un angle $\omega$t/2.

Si toutefois $\theta_1$ et $\theta_2$ ne sont pas nuls, le dévers d'image n'est plus rigoureusement égal à $\omega$t et il faut y ajouter un correctif $\delta$ et donner au prisme une position $\omega$t/2$+\delta$/2.

Le calcul montre que l'angle $\delta$ vérifie les équations

$$\cos S . \cos \delta = -\cos 2\varphi[\sin \textcircled{H} . \cos (\omega t + \Phi)] + \sin 2\varphi . \cos \Theta \qquad (2)$$

$$\cos S . \sin \delta = \sin \Theta . \sin (\omega t + \Phi) \qquad (3)$$

Le second membre de l'équation (2) est disponible sur le secondaire du résolveur 33 non utilisé pour la stabilisation du site, et de même, le second membre de l'équation (3) est disponible sur le secondaire du résolveur 31 non utilisé jusqu'ici.

Ces deux tensions sont appliquées aux primaires d'un résolveur 41 dont le rotor est entraîné en synchronisme avec le tube de visée 3. On obtient donc aux sorties du résolveur 41 des tensions

$$\cos S . \cos (\omega t + \delta) \text{ et } \cos S . \sin (\omega t + \delta)$$

Ces tensions sont appliquées à une unité d'asservissement, comprenant un résolveur 42, un amplificateur 43 et un moteur 44, qui réalise mécaniquement l'angle $(\omega t + \delta)$. Le moteur 44 entraîne par l'intermédiaire d'un mécanisme de réduction 2:1 le prisme de Wollaston 9 (cf. figure 1) dont la position angulaire est ainsi $\omega$t/2$+\delta$/2.

Les données disponibles aux sorties des ensembles 20 et 30 donnent également la possibilité de déterminer le gisement G de la direction de visée.

On utilise pour cela les relations suivantes:

$$\cos S . \sin G = -\sin 2\varphi . \cos \theta_2 \sin \omega t + \cos 2\varphi . \sin \theta_2 \qquad (4)$$

$$\cos S . \cos G = -\sin 2\varphi[\cos \omega t . \cos \theta_1 - \sin \omega t . \sin \theta_2 . \sin \theta_1] + \cos 2\varphi[\cos \theta_2 . \sin \theta_1] \qquad (5)$$

Les seconds membres de équations (4) et (5) peuvent être "construits" de façon similaire à ce qui a été décrit plus haut pour l'ensemble 40, au moyen de résolveurs, puis les tensions obtenues sont appliquées à une unité d'asservissement.

La chaîne de calcul du gisement comprend un ensemble 20' qui complète l'ensemble 20, et qui comprend deux résolveurs 25 et 26 solidaires du moteur 22 et recevant respectivement sin $\theta_1$ et sin $\theta_2$. Ils délivrent donc des tensions sin $\theta_2$ . cos $\theta_2$ et sin $\theta_1$ . sin $\theta_2$.

L'ensemble de calcul 50 proprement dit comprend des résolveurs 51', 52 entraînés en synchronisme avec le tube de visée.

Le résolveur 51 reçoit la tension cos $\theta_2$ et délivre par conséquent cos $\theta_2$ . sin $\omega$t.

Le résolveur 52 reçoit à ses entrées cos $\theta_1$ et sin $\theta_1$ . sin $\theta_2$ et délivre:

$$\cos \omega t . \cos \varphi_1 - \sin \omega t . \sin \theta_2 . \sin \theta_1.$$

Deux autres résolveurs 53, 54 ont leur rotor relié au moteur 34, et occupent donc une position 2$\varphi$.

Le résolveur 53 reçoit sur une entrée la tension cos $\theta_2$ . sin $\omega$t en provenance du résolveur 51 et sur l'autre entrée sin $\theta_2$. Il délivre ainsi (cf. équation (5)) une tension cos S . cos G.

Le résolveur 54 reçoit sur une entrée la tension issue du résolveur 52 et sur l'autre entrée la tension cos $\theta_2$ . sin $\theta_2$. Il délivre donc la tension cos S . sin G (voir équation (4)).

Les tensions de sortie des résolveurs 53, 54 sont appliquées aux primaires d'un résolveur 55 qui forme avec l'amplificateur 56 et le moteur 57 une unité d'asservissement. Il en résulte que le rotor du résolveur 55 prend une position angulaire G, ce qui permet l'affichage—ou une exploitation d'un autre type—de l'angle de gisement de la direction de visée.

On notera que, pour ne pas surcharger le dessin, certains des résolveurs prévus à la figure 4 n'ont pas été représentés à la figure 1.

**Revendications**

1. Dispositif optique de surveillance panoramique porté par un véhicule, comprenant un tube de visée, monté, dans le véhicule, rotatif autour de son axe optique et à l'extrémité supérieure duquel est monté un miroir, mobile autour d'un axe orthogonal à l'axe optique du tube et déterminant l'angle de site d'une direction de visée, un organe d'entraînement fixé au véhicule pour entraîner le tube en rotation, et une centrale de verticale pour fournir des tensions électriques représentatives de l'angle de tangage et de l'angle de roulis du véhicule, caractérisé par le fait qu'il comprend des moyens electromécaniques agencés pour calculer l'angle de site de la direction de visée et l'asservir à un angle de site ($S_o$) déterminé, comportant un premier résolveur (31) dont le rotor est entraîné en synchronisme avec le tube de visée (3) et dont les primaires sont reliés à ladite centrale, un second résolveur (32) fournissant une tension représentative de l'angle de site ($S_o$), un troisiéme résolveur (33) dont les primaires sont reliés respectivement à l'un des secondaires du premier résolveur et à ladite centrale et fournissant à l'un de ses secondaires une tension de sortie représentative de l'angle de site de la direction de visée, en fonction des angles de tangage et de roulis du véhicule, une boucle de réaction (34, 35) pour asservir la tension de sortie du troisième résolveur (33) sur la tension de sortie du second résolveur (32), et des moyens (15) pour transmettre le déplacement du rotor du troisième résolveur (33) à l'axe du miroir (14) avec un rapport 2:1.

2. Dispositif selon la revendication 1, comprenant un oculaire fixe, relié au tube de visée, et un prisme monté rotatif dans cet oculaire pour la correction du dévers d'image, caractérisé par le fait qu'il comprend un quatrième résolveur (41) dont le rotor est entraîné en synchronisme avec le tube de visée, dont les primaires sont reliés respectivement à l'autre secondaire du premier résolveur (31) et à l'autre secondaire du troisième résolveur (33), une unité d'asservissement comprenant un moteur (44) et un cinquième résolveur (42) dont le rotor est accouplé audit moteur, dont les primaires sont reliés aux secondaires du quatriéme résolveur (41) et dont un secondaire est relié au moteur (44), et des moyens (11, 12, 13) transmettant le déplacement de l'arbre du moteur (44) au prisme rotatif (9) avec un rapport de transmission 2:1.

**Patentansprüche**

1. An einem Fahrzeug montierbares optisches gerät für die Panoramabaobachtung, das ein in dem Fahrzeug um seine Optische Achse drehbar gelagertes Visierrohr, einen an dem oberen Ende des Visierrohres angeordneten Spiegel, der um eine senkrecht zur optischen Achse des Visierrohres liegende Achse beweglich ist und den Elevationswinkel einer Beobachtungsstrahlrichtung definiert, ein an dem Fahrzeug anbringbares Antriebsorgan für den Drehantrieb des Visierrohres, und eine Vertikal-Zentrale umfaßt, um elektrische Spannungen zu liefern, die für den Stampfwinkel und den Schlingerwinkel des Fahrzeuges repräsentativ sind, dadurch gekennzeichnet daß es, um den Elevationswinkel der Beobachtungsstrahlrichtung zu berechnen und diesen einem vorgegebenen Elevationswinkel (So) zuzuordnen, elektromechanische Einrichtungen aufweist, die einen ersten Resolver (31), dessen Rotor synchron mit dem Visierrohr (3) antreibbar ist und dessen Primärwicklungen an die Vertikal-Zentrale angeschlossen sind, einen zweiten Resolver (32), der eine für den Elevationswinkel (So) repräsentative Spannung liefert, einen dritten Resolver (33), dessen Primärwicklungen an eine der Sekundärwicklungen des rsten Resolvers bzw. an die Vertikal-Zentrale angeschlossen sind, und der an einer seiner Sekundärwicklungen eine Ausgangsspannung liefert, die als Funktion der Stampf- und Schlingerwinkel des Fahrzeuges repräsentative für den Elevationswinkel der Beobachtungsstrahlrichtung ist, einen Reaktionskreis (34, 35), um die Ausgangsspannung des dritten resolvers (33) der Ausgangsspannung des zweiten Resolvers (32) zuzuordnen, und Mittel (15) enthalten, um die Bewegung des Rotors des dritten Resolvers (33) auf die Achse des Spiegels (14) im Verhältnis von 2:1 zu übertragen.

2. Gerät nach Anspruch 1 mit einem an das Visierrohr Gerät angeschlossenen feststehenden Okular und einem in diesem Okular drehbar gelagerten Prisma für die Korrektur der Bildschräglage, dadurch gekennzeichnet, daß es einem vierten Resolver (41), dessen Rotor synchron mit dem Visierrohr antreibbar ist, dessen Primärwicklungen an die andere Sekundärwicklungen des ersten Resolvers (31) bzw. an die andere Sekundärwicklung des dritten Resolvers (33) angeschlossen sind, eine Steuervorrichtung mit einem Motor (44) und einem fünften Resolver (42), dessen Rotor mit diesem Motor gekoppelt ist, dessen Primärwicklungen an die Sekundärwicklungen des vierten Resolvers (41) und dessen eine Sekundärwicklungen an dem Motor (44) angeschlossen sind, und Elemente (11, 12, 13) umfaßt, die die Bewegung der Welle des Motors (44) auf das drehbar gelagerte Prisma (9) mit einem Übersetzungsverhältnis von 2:1 überträgt.

**Claims**

1. Optical device for panoramic survey carried on a vehicle, comprising a sighting tube, rotatably mounted in the vehicle about its optical axis and at the upper end of which is a mirror movably mounted about an axis orthogonal to the optical axis of the tube and determining the site angle of a sighting direction, a driving member fixed to the vehicle for rotating the tube, and a vertical central for supplying electrical voltages representative of the pitch angle and the roll angle of the vehicle, characterized in that it comprises electromechanical means for computing the site angle of the sighting direction and servoing it to a determined site angle ($S_o$), comprising a first resolver (31) the rotor of which is driven in synchronism with the sighting tube (3) and the primary windings of which are connected to said vertical central, a second resolver (32) supplying a voltage representative of the site angle ($S_o$), a third resolver (33) the primary windings of which are respectively connected to one of the secondary windings of the first resolver and to said central and supplying at one of its secondary windings an output voltage representative of the site angle of the slighting direction, in function of the pitch and roll angles of the vehicle, a feed-back loop (34, 35) for servoing the output voltage of the third resolver (33) to the output voltage of the second resolver (32), and means (15) for transmitting the displacement of the rotor of the third resolver (33) to the axis of the mirror (14) with a 2:1 ratio.

2. Device according to claim 1, comprising a fixed eyepiece connected to the sighting tube, and a prism rotatably mounted in said eyepiece for the correction of the image cant, characterized in that it comprises a fourth resolver (41) the rotor of which is driven in synchronism with the sighting tube, the primary windings of which are respectively connected to the other secondary winding of the first resolver (31) and the other secondary winding of the third resolver (33), a servo-control unit comprising a motor (44) and a fifth resolver (42) the rotor of which is coupled to said motor, the primary windings of which are connected to the secondary windings of the fourth resolver (41) and a secondary winding of which is connected to the motor (44), and means (11, 12, 13) for transmitting the displacement of the shaft of the motor (44) to the rotatable prism (9) with a 2:1 transmission ratio.

6

FIG 1

FIG. 2

FIG. 3

FIG.4